# EUROPEAN PATENT SPECIFICATION

(11) **EP 1 745 880 B1**
(45) Date of publication and mention of the grant of the patent: **03.08.2011**
(21) Application number: 06729011.4
(22) Date of filing: 14.03.2006
(51) Int. Cl.: B23K 9/073, H02M 9/00

(54) **CONSUMABLE ELECTRODE ARC-WELDING MACHINE**
LICHTBOGENSCHWEISSMASCHINE MIT ABSCHMELZELEKTRODE
MACHINE DE SOUDAGE A L'ARC A ELECTRODE CONSOMMABLE

(30) Priority: 14.04.2005 JP 2005116866
(43) Date of publication of application: 24.01.2007
(73) Proprietor: Panasonic Corporation, Kadoma-shi Osaka 571-8501 (JP)
(72) Inventor: NAGANO, Motoyasu, Chuo-ku, Osaka-shi, Osaka 540-6319 (JP); SHIMABAYASHI, Shinsuke, Chuo-ku, Osaka-shi, Osaka 540-6319 (JP)
(74) Representative: Pautex Schneider, Nicole Véronique
(86) International application number: PCT/JP2006/304946
(87) International publication number: WO 2006/112219

(56) References cited:
- JP-A- 10 109 163
- JP-A- 10 109 163
- JP-A- 11 058 016
- JP-A- 59 202 176
- JP-A- 2001 334 365
- US-A- 5 834 732

## Description

The present invention relates to a consumable electrode type welding machine according to the preamble of claim 1 (see, for example, JP 10-109 163A).

### BACKGROUND ART

It has been generally known that the conventional consumable electrode type welding machine, which makes use of an arc between wire and base metal, controls the voltage during arc period while it controls the current during short-circuit period. This type of technology has been disclosed in, for example, Japanese Patent Unexamined Publication No. H10-109163, or in JP 10-109163A.

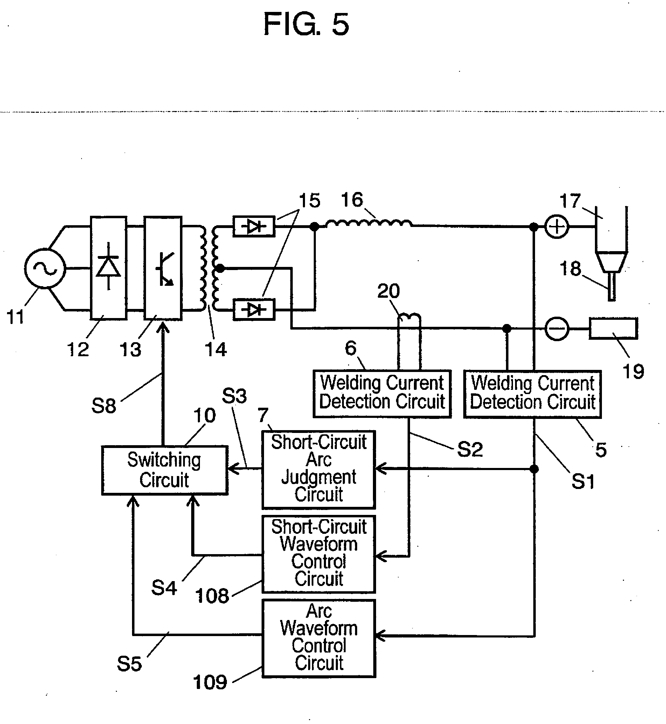

Fig. 5 shows a schematic diagram of the conventional consumable electrode type arc welding machine. In the conventional consumable electrode type arc welding machine shown in Fig. 5, output of incoming power of three-phase AC 11 is rectified by diode rectifier circuit 12 into DC power. And then, the DC current is converted by switching element 13 into high frequency electricity of some several tens of thousand to several hundreds kHz, and transformer 14 lowers voltage thereof. The high frequency output of lowered voltage is rectified by diode rectifier circuit 15. The rectified output is supplied to wire 18 through reactor 16 and torch 17. Wire 18 is thus melted and welded to base metal 19.

Specifically, the consumable electrode type arc welding machine includes welding voltage detection circuit 5 which detects the welding voltage and outputs welding voltage detection signal S1, and welding current detection circuit 6 which detects the welding current via current detector 20 and outputs welding current detection signal S2. The welding machine also includes short-circuit arc judgment circuit 7 which accepts welding voltage detection signal S1 and judges whether it is in a short-circuit state or in an arc state, and outputs short-circuit arc judgment signal S3. The welding machine further includes short-circuit waveform control circuit 108 for outputting short-circuit waveform control signal S4 based on welding current detection signal S2 inputted thereto, and arc waveform control circuit 109 for outputting arc waveform control signal S5 for an arc period based on welding voltage detection signal S1 inputted thereto. Still further, it includes also switching circuit 10 which selects arc waveform control signal S5 for an arc period and short-circuit waveform control signal S4 for a short-circuit period in accordance with short-circuit arc judgment signal S3, and outputs a selected control signal. Switching circuit 10 delivers short-circuit waveform control signal S4 to switching element 13 in a short- circuit period, whereas when it is released from the short-circuit period and entered into an arc period it delivers arc waveform control signal S5 to switching element 13.

It is a broadly practiced technology among the conventional consumable electrode type welding machines to control the voltage in an arc period and control the current in a short-circuit period, under certain given welding conditions. Especially during an arc period, the welding machine relies mostly on a self control of arc-length. In such a conventional method of welding control, however, a state that is uncontrollable by means of the voltage control in arc period, or the current control in short-circuit period, would occur; such a state can be caused for example by the emergence of a micro short-circuit during welding, fattening of drip at the tip-end of wire during arc period, etc. Thus, the conventional method of welding control can not totally prevent the occurrence of such uncertainty factors as arc instability, sputtering phenomenon, arc break, etc.

### SUMMARY OF THE INVENTION

The above problems are overcome with a consumable electrode type welding machine as mentioned above, which is further characterized by the features defined in the characterizing portion of claim 1.

The consumable electrode type arc welding machine according to the present invention supplies wire for generating an arc between the wire and base metal of welding. The welding machine includes a welding voltage detection circuit for detecting the welding voltage and outputting a welding voltage detection signal, a welding current detection circuit for detecting a welding current and outputting a welding current detection signal, a short-circuit arc judgment circuit for judging whether it is in a short-circuit state or in an arc state and outputting a short-circuit arc judgment signal after accepting the welding voltage detection signal, a short-circuit waveform control circuit for outputting a short-circuit waveform control signal after accepting the welding current detection signal, an arc waveform control circuit for outputting an arc waveform control signal in an arc period after accepting the welding voltage detection signal, and a first switching circuit for selectively outputting the arc waveform control signal in an arc period or the short-circuit waveform control signal in a short-circuit period in accordance with the short-circuit arc judgment signal after accepting the short-circuit waveform control signal and the arc waveform control signal. The output from first switching circuit controls the welding power. The welding machine further includes an arc resistance calculator for calculating an arc resistance signal after accepting the welding voltage detection signal and the welding current detection signal and outputting the calculated signal, a constant-current control period setting unit for accepting the arc resistance signal and outputting a constant-current control period signal which indicates a period of constant-current control when the arc resistance signal continuously shows a certain value that is higher than a certain specific value, a constant-current circuit for accepting the welding current detection signal and outputting, based on the inputted detection signal, a constant-current signal for controlling the current to be staying constant at a certain specific value, and a second switching circuit for selecting a constant-current signal in a constant-current control period or an output signal from the first switching circuit in a period other than the constant-current control period in accordance with the constant-current control period signal and outputting a selected signal. In the period other than the constant-current control period, the arc resistance signal is delivered to at least one of the short-circuit waveform control circuit and the arc waveform control circuit, and the welding power is controlled based on the output from second switching circuit.

### BRIEF DESCRIPTION OF THE DRAWINGS

Fig. 1 is a block diagram showing the outline structure of a consumable electrode type arc welding machine not covered by the present invention.
Fig. 2 is a relationship chart of welding voltage, welding current and arc resistance signal according to the first and second examples and according to the present invention.
Fig. 3 is a block diagram showing the outline structure of a consumable electrode type arc welding machine not covered by the present invention.
Fig. 4 is a block diagram showing the outline structure of a consumable electrode type arc welding machine in accordance with the present invention.
Fig. 5 is a block diagram showing the outline structure of a conventional consumable electrode type arc welding machine.

### Reference marks in the drawings

- 1: Arc Resistance Calculator
- 2: Constant-Current Control Circuit
- 3: Constant-Current Control Period Setting Unit
- 4: Second Switching Circuit
- 5: Welding Voltage Detection Circuit
- 6: Welding Current Detection Circuit
- 7: Short-Circuit Arc Judgment Circuit
- 8, 108: Short-Circuit Waveform Control Circuit
- 9, 109: Arc Waveform Control Circuit
- 10: Switching Circuit (First Switching Circuit)
- 11: Incoming power of three-phase AC
- 12: Diode Rectifier Circuit
- 13: Switching Element
- 14: Transformer
- 15: Diode Rectifier Circuit
- 16: Reactor
- 17: Torch
- 18: Wire
- 19: Base metal of welding
- 20: Current Detector
- 21: Short-Circuit Period
- 22: Arc Period
- 23: Welding Voltage
- 24: Welding Current
- 25: Arc Resistance Signal
- S1: Welding Voltage Detection Signal
- S2: Welding Current Detection Signal
- S3: Short-Circuit Arc Judgment Signal
- S4, S7: Short-Circuit Waveform Control Signal
- S5, S9: Arc Waveform Control Signal
- S6: Arc Resistance Signal
- S8, S12: Switching Element Control Signal
- S10: Constant-Current Control Period Signal
- S11: Constant-Current Signal

### DETAILED DESCRIPTION OF PREFERRED EMBODIMENTS

### FIRST EXEMPLE, not covered by the present invention

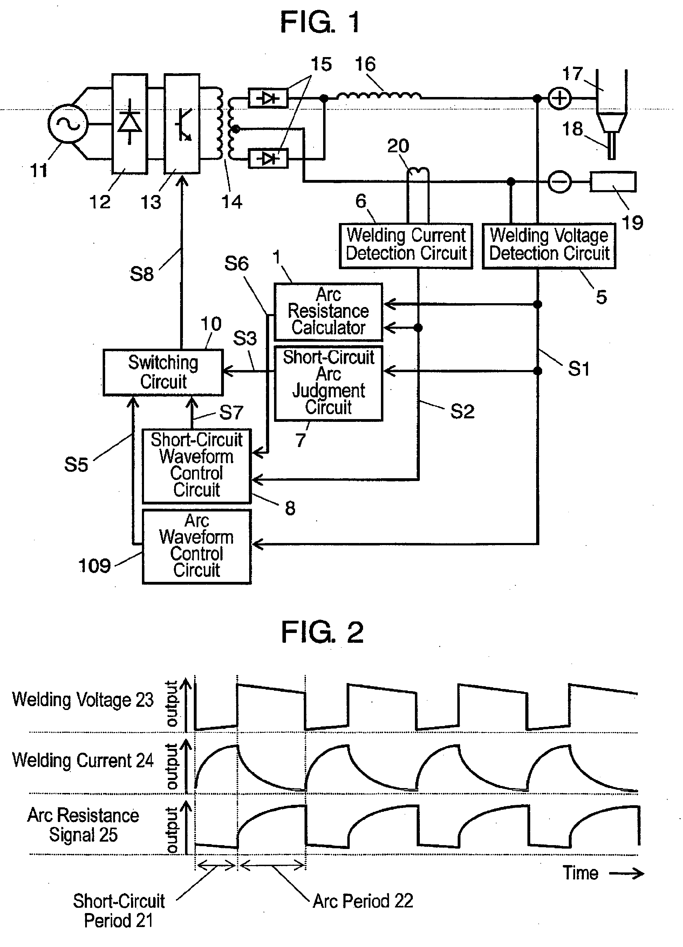

A consumable electrode type arc welding machine not covered by the present invention is described referring to Figs. 1 and 2. Those constituent portions identical to those of the conventional consumable electrode type arc welding machine described in the above referring to Fig. 5 are designated by using the same symbols, and detailed description of these portions are eliminated. The main point of difference of the arc welding machine of Figure 1 as compared with the conventional counterpart is in short-circuit waveform control circuit 8, and that arc resistance calculator 1, which will be described later, is added.

In Fig. 1, welding voltage detection circuit 5 detects the welding voltage, and outputs welding voltage detection signal S1. Welding current detection circuit 6 detects the welding current, and outputs welding current detection signal S2. Arc resistance calculator 1 treats welding voltage detection signal S1 and welding current detection signal S2 as input signals. Based on these input signals, calculator 1 calculates an arc resistance value (for example, it calculates an arc resistance value by dividing welding voltage detection signal S1 with welding current detection signal S2). Arc resistance calculator 1 outputs the result of calculation as arc resistance signal S6, to short-circuit waveform control circuit 8. Short-circuit arc judgment circuit 7 accepts welding voltage detection signal S1 as an input signal, judges whether it is in a short-circuit state or in an arc state based on the input signal, and conveys short-circuit arc judgment signal S3 to switching circuit 10. Short-circuit waveform control circuit 8 accepts arc resistance signal S6 and welding current detection signal S2 as input signals, outputs short-circuit waveform control signal S7 in accordance with these input signals, and delivers the output signal to switching circuit 10. In short-circuit period, the short-circuit current waveform is controlled by means of changing the tilting curve of short-circuit current waveform due to short-circuit waveform control signal S7. Arc waveform control circuit 109 accepts welding voltage detection signal S1 as an input signal, outputs arc waveform control signal S5 based on the input signal, and delivers it to switching circuit 10. Switching circuit 10 accepts short-circuit arc judgment signal S3, arc waveform control signal S5 and short-circuit waveform control signal S7 as input signals. Switching circuit 10 selects short-circuit waveform control signal S7 when short-circuit arc judgment signal S3 indicates a short-circuit state, or arc waveform control signal S5 when an arc state is indicated, and outputs switching element control signal S8 to switching element 13.

Fig. 2 shows an exemplary relationship among welding current 24, welding voltage 23 and arc resistance signal 25 in the consuming electrode type arc welding machine of Figure 1. As shown in Fig. 2, during short-circuit period 21, welding voltage 23 stays at a low level, while welding current 24 increases at a certain inclination in accordance with short- circuit waveform control signal S7. In the conventional consuming electrode type arc welding machine shown in Fig. 5, the welding current in short-circuit state is controlled in accordance with short-circuit waveform control signal S4, but the welding voltage in that state is left out of control. However, the tip-end shape of wire 18 and the state of contact made between base metal 19 and wire 18 are unstable, thus the welding voltage always changes. When the welding voltage becomes too high, it sometimes causes a sputtering phenomenon.

The consumable electrode type arc welding machine is provided with arc resistance calculator 1 as shown in Fig. 1. Arc resistance calculator 1 calculates arc resistance signal S6 based on welding voltage detection signal S1 and welding current detection signal S2, and outputs the results of calculation. If welding voltage 23 changes during short-circuit period 21, it outputs arc resistance signal S6 according to the changing to short-circuit waveform control circuit 8. Namely, it outputs arc resistance signal S6 in which the welding voltage is also taken into consideration, besides the welding current. Short-circuit waveform control circuit 8 accepts arc resistance signal S6 as well as welding current detection signal S2; thereby, it outputs short-circuit waveform control signal S7 which corresponds to the change in welding voltage in addition to the change in welding current. Switching circuit 10 accepts short-circuit waveform control signal S7, and outputs switching element control signal S8 based on the input signal. Switching element control signal S8 is input to switching element 13 to control the welding power. Short-circuit waveform control circuit 8 can be formed of, for example, an arithmetic circuit which processes adding welding current detection signal S2 and arc resistance signal S6. Arc resistance signal S6 reflects changes in the tip-end shape of the wire, state of contact between base metal 19 and wire 18 during short-circuit period 21, as well as change in the arc resistance value due to droplet transfer or the like. In a case when the arc resistance value becomes too-high causing a too-high welding voltage, the welding voltage is lowered to prevent sputtering phenomenon. Or, when the arc resistance value happened to turn out to be too-small causing a too-low welding voltage, the welding voltage is raised and the short-circuit period is shortened, which helps shifting to arc period earlier. Thus it can prevent possible troubles, such as buckling of the wire. As described in the above, the consumable electrode type arc welding machine can control the welding power properly.

### SECOND EXEMPLE, not covered by the present invention

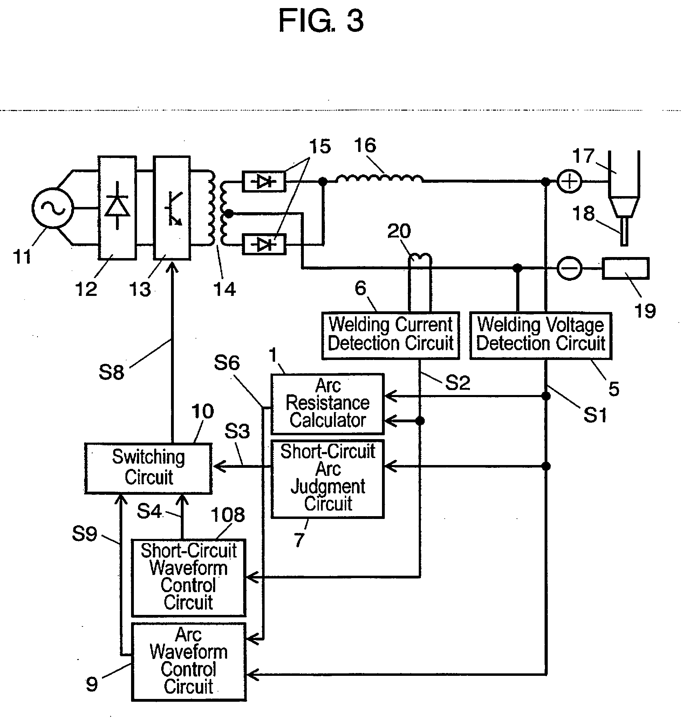

Fig. 3 is a block diagram showing the outline structure of a consumable electrode type arc welding machine not covered by the present invention. In Fig. 3, those portions having identical structure as those in the first example in Figure 1 are identified by designating with the same marks, and their detailed descriptions are eliminated. The point of difference as compared with Figure 1 is in short-circuit waveform control circuit 108 and arc waveform control circuit 9, and that the output of arc resistance calculator 1 is delivered to arc waveform control circuit 9, instead of short-circuit waveform control circuit 108.

In Fig. 3, arc resistance calculator 1 accepts welding voltage detection signal S1 from welding voltage detection circuit 5 and welding current detection signal S2 from welding current detection circuit 6 as input signals. Arc resistance calculator 1 calculates an arc resistance value from these input signals, and delivers the result of calculation as arc resistance signal S6 to arc waveform control circuit 9. Arc waveform control circuit 9 accepts arc resistance signal S6 and welding voltage detection signal S1 as input signals, outputs arc waveform control signal S9 based on these input signals, and delivers the signal to switching circuit 10. Arc waveform control signal S9 outputs a control signal for changing the tilt of welding voltage waveform in an arc period. Thus it can control the welding voltage waveform in arc period. Short-circuit waveform control circuit 108 accepts welding current detection signal S2 as an input signal, and outputs short-circuit waveform control signal S4 to switching circuit 10. Switching circuit 10 accepts short-circuit arc judgment signal S3, arc waveform control signal S9 and short-circuit waveform control signal S4 as input signals. When short circuit arc judgment signal S3 indicates a short circuit state, switching circuit 10 selects short-circuit waveform control signal S4, or selects arc waveform control signal S9 when signal S3 indicates an arc state, and outputs a selected signal to switching element 13.

During arc period 22, welding voltage 23 goes lower at a certain inclination, as shown in Fig. 2, in accordance with arc waveform control signal S9. Welding current 24 is also decreased. In the welding control performed by the conventional consumable electrode type arc welding machine shown in Fig. 5, the welding voltage is controlled on the basis of arc waveform control signal S5, but the welding current is left to be out of control. However, the welding current is always fluctuating due to conditions of base metal 19 and other factors. The instability of arcing can not help ill-affecting the appearance of welding beads. So, it is always requested to have a stable arc discharge. Fluctuation of welding current at the end of arc period may cause an arc break, which may well lead to a defect of welding.

On the other hand, the consumable electrode type arc welding machine in accordance with the present Example is provided with arc resistance calculator 1, which calculates arc resistance signal S6 based on welding voltage detection signal S1 and welding current detection signal S2, and outputs it. When welding current 24 changes during arc period 22, it outputs arc resistance signal S6 according to the change in welding current 24 to arc waveform control circuit 9. Namely, arc resistance signal S6 taking the welding current into consideration as well as the welding voltage is output. Receiving arc resistance signal S6 in addition to welding voltage detection signal S1, arc waveform control circuit 9 outputs arc waveform control signal S9 reflecting the change in the welding current. The output controls the welding power via switching circuit 10 and switching element 13. In this way, the instability of arcing can be prevented for an appropriate control of welding. If, for example, arc current goes lower at the end of arc period 22, and the arc resistance value is increased to exceed a certain specific level, arc waveform control circuit 9 outputs arc waveform control signal S9 based on arc resistance signal S6 at that moment. Based on the output, switching element 13 controls the welding power with a certain specific constant-current value that is higher than that output at the normal constant-voltage control in arc period. Thereby, an arc break can be prevented.

Although the above descriptions in the first and the second examples have been based on an exemplary case where an output from arc resistance calculator 1, viz. arc resistance signal S6, is delivered to either one of short-circuit waveform control circuit and arc waveform control circuit 9, the signal may of course be delivered to both of the short-circuit waveform control circuit and the arc waveform control circuit.

Besides the above-described control structure, other configurations can be considered; namely, instead of providing an independent arc resistance calculator 1, inputting welding voltage detection signal S1 to short-circuit waveform control circuit 8 in addition to welding current detection signal S2, or inputting welding current detection signal 52 besides welding voltage detection signal S1 to arc waveform control circuit 9. These configurations, however, make it necessary to provide a circuit that is equivalent to arc resistance calculator 1 in short-circuit waveform control circuit 8 and arc waveform control circuit 9, respectively. So, it seems advantageous in terms of the economy and the space to provide an independent arc resistance calculator 1, like the configuration in the first and the second embodiments above, and deliver the output S6 to short-circuit waveform control circuit 8 and arc waveform control circuit 9.

### EXEMPLARY EMBODIMENT OF THE PRESENT INVENTION

Those constituent portions of the present embodiment having identical structure as those in the first and the second examples are designated with the same marks, and the detailed description of such portions are eliminated. The main point of difference from the first and the second examples is that the embodiment of the present invention is further provided with constant-current control circuit 2, constant-current control period setting unit 3 and second switching circuit 4; aiming to prevent an arc break by introducing a constant-current control when the welding current dropped in an arc period. Description on these portions will come later.

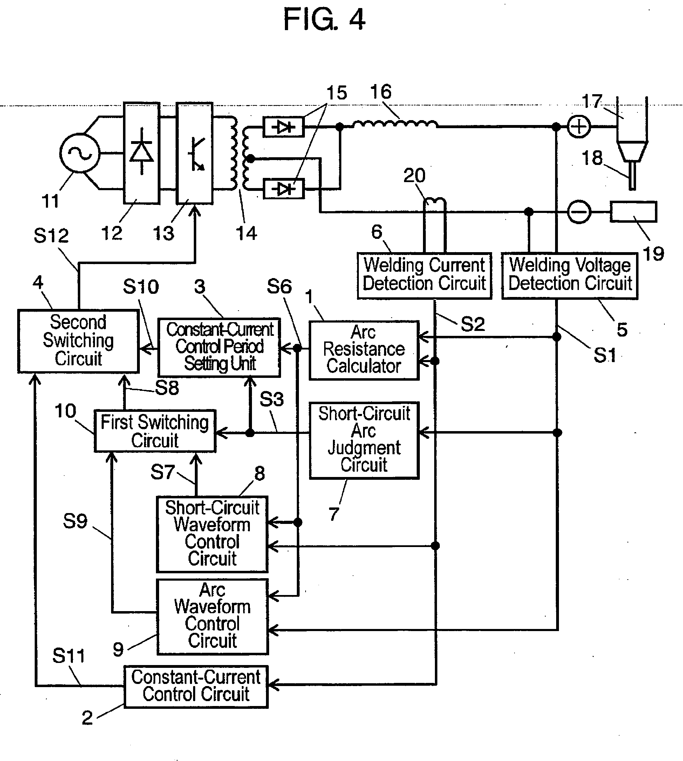

In Fig. 4, arc resistance calculator 1 calculates arc resistance value from welding voltage detection signal S1 and welding current detection signal S2, and outputs the result of calculation result as arc resistance signal S6, to constant-current control period setting unit 3, short-circuit waveform control circuit 8 and arc waveform control circuit 9. Short-circuit waveform control circuit 8 outputs, responding to arc resistance signal S6 and welding current detection signal S2, short-circuit waveform control signal S7 to first switching circuit 10 for controlling the welding current waveform in a short-circuit period. Short-circuit waveform control signal S7 is a control signal which can control, for example, an inclination of welding current waveform in the short-circuit period. Arc waveform control circuit 9 outputs, responding to arc resistance signal S6 and welding voltage detection signal S1, arc waveform control signal S9 to first switching circuit 10 for controlling the welding voltage waveform in the arc period. Arc waveform control signal S9 is a control signal which can change, for example, an inclination of welding voltage waveform in an arc period. First switching circuit 10 accepts short-circuit arc judgment signal S3, short-circuit waveform control signal S7 and arc waveform control signal S9 as input signals. First switching circuit 10 selects short-circuit waveform control signal S7 when short-circuit arc judgment signal S3 a short-circuit state, or arc waveform control signal S9 when signal S3 indicates an arc state, and outputs switching element control signal S8 to second switching circuit 4.

Constant-current control period setting unit 3 accepts arc resistance signal S6 and short-circuit arc judgment signal S3 and outputs constant-current control period signal S10 to second switching circuit 4. Constant-current control circuit 2 outputs constant-current signal S11 to second switching circuit 4 based on welding current detection signal S2. Second switching circuit 4 selects switching element control signal S8 or constant-current signal S11 in accordance with constant-current control period signal S10, and outputs the selected signal as switching element control signal S12 to switching element 13. Second switching circuit 4 selects constant-current signal S11 when constant-current control period signal S10 indicates that it is in a constant-current control period, or switching element control signal S8 in a period other than the constant-current control period. Constant-current control period signal S10 exhibits a constant-current control period if arc resistance signal S6 continued showing a certain value that is higher than a certain specific level for a certain length of time in arc period 22.

Those portions identical to those in Fig. 1 or Fig 3 are designated using the same symbols, and description on which portions are eliminated.

Fig. 2 shows an exemplary relationship among waveforms of welding current 24, welding voltage 23 and arc resistance signal 25 of a consuming electrode type arc welding machine in accordance with the embodiment of the present invention.

As shown in Fig. 2, during short-circuit period 21, welding voltage 23 goes to a low level, while welding current 24 increases at a certain inclination in accordance with short-circuit waveform control signal S7. If welding voltage 23 is changed in short-circuit period 21, short-circuit waveform control circuit 8 outputs short-circuit waveform control signal S7 in accordance with the change, after accepting arc resistance signal S6 in accordance with the change together with welding current detection signal S2. Since constant-current control period setting unit 3 doesn't output constant-current control period signal S10 in short-circuit period, second switching circuit 4 selects switching element control signal S8, which is the output from switching circuit 10. Therefore, short-circuit waveform control signal S7 is delivered to switching element 13 via switching circuit 10 and second switching circuit 4. Thus, it helps implementing an appropriate control of welding, in which a sputtering phenomenon due to an over voltage and buckling of wire caused due to a too-low voltage are eliminated.

During arc period 22, welding voltage 23 goes lower at a certain inclination in accordance with arc waveform control signal S9, as shown in Fig. 2. Welding current 24 also decreases. By inputting arc resistance signal S6 according to the change of welding current 24, to arc waveform control circuit 9, arc waveform control signal S9 according to the change is output. In this case, since constant-current control period setting unit 3 doesn't output constant-current control period signal S10, second switching circuit 4 selects the output from switching circuit 10, viz. switching element control signal S8. Therefore, arc waveform control signal S9 is delivered to switching element 13 via switching circuit 10 and second switching circuit 4. In this way, instability of the arc is prevented and an appropriate control can be achieved as described in the second example.

Constant-current control period setting unit 3 accepts arc resistance signal S6 and short-circuit arc judgment signal S3. If arc resistance signal S6 continues exhibiting a value that is higher than a certain specific value for a certain time in arc period 22, for example, unit 3 outputs constant-current control period signal S10 to second switching circuit 4 indicating that it is in a constant-current control period. Upon receiving constant-current control period signal S10, second switching circuit 4 selects constant-current signal S11 and delivers the signal to switching element 13 as switching element control signal S12. In this way, constant-current signal S11 is delivered to switching element 13, thus welding current 24 is controlled to be a constant-current. The constant-current control of welding current 24 is performed with a certain specific current value that is greater than the welding current value output at the moment when arc waveform control signal S9 is output. Therefore, if welding current 24 goes smaller at a point close to the end of arc period 22, or arc resistance signal S6 exhibits a value that is higher than a certain specific value for a certain time, for example, the constant-current control of welding current 24 is conducted with a certain specific current value that is greater than the welding current value output at the moment when arc waveform control signal S9 is output. Namely, since the process changed to short- circuit state while welding current 24 is kept in a substantial current value, an arc break can be avoided to achieve a stable arc welding operation.

Although the embodiment of the present invention is described that arc resistance signal S6 is delivered to both short-circuit waveform control circuit 8 and arc waveform control circuit 9, other configuration may of course be contrived in which signal S6 is delivered to either one of the two circuits.

### INDUSTRIAL APPLICABILITY

A consumable electrode type arc welding machine in the present invention offers a stable welding operation, by controlling the welding power based on an arc resistance signal derived from the welding voltage and the welding current. Thus it would bring about a certain advantage in the welding industry which makes use of an arc discharge generated between a welding wire and a base metal of welding.

## Claims

1. A consumable electrode type arc welding machine which makes use of an arc generated between a base metal (19) of welding and a wire (18)
supplied thereto, the machine comprising:
a welding voltage detection circuit (5) for detecting a welding voltage and outputting a welding voltage detection signal;
a welding current detection circuit (6) for detecting a welding current and outputting a welding current detection signal;
a short-circuit arc judgment circuit (7) for outputting a short-circuit arc judgment signal after accepting the welding voltage detection signal and judging whether the machine is in a short-circuit state or in a arc state;
a short-circuit waveform control circuit (8) for outputting a short-circuit waveform control signal after accepting the welding current detection signal; '
an arc waveform control circuit (9) for outputting an arc waveform control signal for an arc period after accepting the welding voltage detection signal; and a first switching circuit (10) which accepts the short-circuit waveform control signal and the arc waveform control signal and selects the arc waveform control signal in the arc period or the short-circuit waveform control signal in the short-circuit period based on the short-circuit arc judgment signal, and outputs a selected signal;
wherein a welding power is controlled by the output from the first switching circuit (10),
**characterized in that**,
the machine further comprises:
an arc resistance calculator (1) for calculating and outputting an arc resistance signal after accepting the welding voltage detection signal and the welding current detection signal;
a constant-current control period setting unit (3) outputting a constant-current control period signal which indicates a constant-current control period after accepting the arc resistance signal and when the arc resistance signal continues exhibiting a value that is greater than a certain specific value;
a constant-current control circuit (2) for outputting a constant-current signal for implementing a certain specific constant-current value after accepting the welding current detection signal and based on the inputted welding current detection signal; and
a second switching circuit (4) for selecting, in accordance with the constant-current control period signal, one of the constant-current signal in the constant-current control period and the output signal from the first switching circuit (10) in a period other than the constant-current control period, and outputting a selected signal;
wherein in the period other than the constant-current control period, the arc resistance signal is delivered to at least one of the short-circuit waveform control circuit (8) and the arc waveform control circuit (9) and the welding power is controlled based on the output from the second switching circuit (4).

2. The consumable electrode type arc welding machine according to claim 1, wherein
the short-circuit waveform control circuit (8) accepts the welding current detection signal and the arc resistance signal and outputs a short-circuit waveform control signal based on the arc resistance signal,
the first switching circuit (10) selects the arc waveform control signal when the short-circuit arc judgment signal indicates the arc period, when the short-circuit arc judgment signal indicates the short-circuit period, the first switching circuit (10) selects the short-circuit waveform control signal, and outputs a selected signal,
the welding power is controlled based on the output from the second switching circuit (4).

3. The consumable electrode type arc welding machine according to claim 1, wherein
the arc waveform control circuit (9) accepts the welding voltage detection signal and the arc resistance signal and outputs an arc waveform control signal based on the arc resistance signal,
the first switching circuit (10) selects the arc waveform control signal when the short-circuit arc judgment signal indicates the arc period, when the short-circuit arc judgment signal indicates the short-circuit period, the first switching circuit (10) selects the short-circuit waveform control signal, and outputs a selected signal,
the welding power is controlled based on the output from the second switching circuit (4).

4. The consumable electrode type arc welding machine according to claim 1, wherein
the short-circuit waveform control circuit (8) accepts the welding current detection signal and the arc resistance signal and outputs a short-circuit waveform control signal based on the arc resistance signal,
the arc waveform control circuit (9) accepts the welding voltage detection signal and the arc resistance signal and outputs an arc waveform control signal for the arc period based on the arc resistance signal,
the first switching circuit (10) selects the arc waveform control signal when the short-circuit arc judgment signal indicates the arc period, when the short-circuit arc judgment signal indicates the short-circuit period, the first switching circuit (10) selects the short-circuit waveform control signal, and outputs a selected signal,
the welding power is controlled based on the output from the second switching circuit (4).

## Patentansprüche

1. Lichtbogenschweißgerät mit Abschmelzelektrode, bei welchem ein Lichtbogen verwendet wird, der zwischen einem Basismetall (19) zum Schweißen und einem diesem zugeführten Draht (18) erzeugt wird, wobei das Gerät Folgendes aufweist:
eine Schweißspannungserfassungsschaltung (5) zum Erfassen einer Schweißspannung und Ausgeben eines Schweißspannungserfassungssignals,
eine Schweißstromerfassungsschaltung (6) zum Erfassen eines Schweißstroms und Ausgeben eines Schweißstromerfassungssignals,
eine Kurzschlusslichtbogen-Beurteilungsschaltung (7) zum Ausgeben eines Kurzschlusslichtbogen-Beurteilungssignals nach Übernehmen des Schweißspannungserfassungssignals und Beurteilen, ob sich das Gerät in einem Kurzschlusszustand oder in einem Lichtbogenzustand befindet,
eine Kurzschlusswellenform-Steuerschaltung (8) zum Ausgeben eines Kurzschlusswellenform-Steuersignals nach Übernehmen des Schweißstromerfassungssignals,
eine Lichtbogenwellenform-Steuerschaltung (9) zum Ausgeben eines Lichtbogenwellenform-Steuersignals für eine Lichtbogenperiode nach Übernehmen des Schweißspannungserfassungssignals, und
eine erste Verknüpfungsschaltung (10), welche das Kurzschlusswellenform-Steuersignal und das Lichtbogenwellenform-Steuersignal entgegennimmt und auf der Grundlage des Kurzschlusslichtbogen-Beurteilungssignals in der Lichtbogenperiode das Lichtbogenwellenform-Steuersignal oder in der Kurzschlussperiode das Kurzschlusswellenform-Steuersignal auswählt und ein ausgewähltes Signal ausgibt,
wobei eine Schweißleistung durch den Ausgang der ersten Verknüpfungsschaltung (10) gesteuert wird,
**dadurch gekennzeichnet, dass**
das Gerät ferner Folgendes aufweist:
eine Lichtbogenwiderstands-Berechnungseinrichtung (1) zum Berechnen und Ausgeben eines Lichtbogenwiderstandssignals nach Entgegennehmen des Schweißspannungserfassungssignals und des Schweißstromerfassungssignals,
eine Konstantstromsteuerperioden-Einstelleinheit (3), die ein Konstantstromsteuerperiodensignal ausgibt, welches nach Übernehmen des Lichtbogenwiderstandssignals und wenn das Lichtbogenwiderstandssignal weiterhin einen Wert zeigt, der größer als ein bestimmter spezifischer Wert ist, eine Konstantstromsteuerperiode angibt,
eine Konstantstromsteuerschaltung (2) zum Ausgeben eines Konstantstromsignals zum Implementieren eines bestimmten spezifischen Konstantstromwerts nach Übernehmen des Schweißstromerfassungssignals und auf der Grundlage des eingegebenen Schweißstromerfassungssignals, und
eine zweite Verknüpfungsschaltung (4), welche in Übereinstimmung mit dem Konstantstromsteuerperiodensignal in der Konstantstromsteuerperiode das Konstantstromsignal oder in einer anderen als der Konstantstromsteuerperiode das Ausgangssignal der ersten Verknüpfungsschaltung (10) auswählt und ein ausgewähltes Signal ausgibt,
wobei in der anderen Periode als der Konstantstromsteuerperiode das Lichtbogenwiderstandssignal mindestens der Kurschlusswellenform-Steuerschaltung (8) und/oder der Lichtbogenwellenform-Steuerschaltung (9) übermittelt wird, und die Schweißleistung auf der Grundlage des Ausgangs der zweiten Verknüpfungsschaltung (4) gesteuert wird.

2. Lichtbogenschweißgerät mit Abschmelzelektrode nach Anspruch 1, wobei
die Kurzschlusswellenform-Steuerschaltung (8) das Schweißstromerfassungssignal und das Lichtbogenwiderstandssignal entgegennimmt und auf der Grundlage des Lichtbogenwiderstandssignals ein Kurzschlusswellenform-Steuersignal ausgibt,
die erste Verknüpfungsschaltung (10) das Lichtbogenwellenform-Steuersignal auswählt, wenn das Kurzschlusslichtbogen-Beurteilungssignal die Lichtbogenperiode anzeigt, oder das Kurzschlusswellenform-Steuersignal auswählt, wenn das Kurzschlusslichtbogen-Beurteilungssignal die Kurzschlussperiode anzeigt, und ein ausgewähltes Signal ausgibt,
die Schweißleistung auf der Grundlage des Ausgangs der zweiten Verknüpfungsschaltung (4) gesteuert wird.

3. Lichtbogenschweißgerät mit Abschmelzelektrode nach Anspruch 1, wobei
die Lichtbogenwellenform-Steuerschaltung (9) das Schweißspannungserfassungssignal und das Lichtbogenwiderstandssignal entgegennimmt und auf der Grundlage des Lichtbogenwiderstandssignals ein Lichtbogenwellenform-Steuersignal ausgibt,
die erste Verknüpfungsschaltung (10) das Lichtbogenwellenform-Steuersignal auswählt, wenn das Kurzschlusslichtbogen-Beurteilungssignal die Lichtbogenperiode angibt, oder das Kurzschlusswellenform-Steuersignal auswählt, wenn das Kurzschlusslichtbogen-Beurteilungssignal die Kurzschlusspericde anzeigt, und ein ausgewähltes Signal ausgibt,
die Schweißleistung auf der Grundlage des Ausgangs der zweiten Verknüpfungsschaltung (4) gesteuert wird.

4. Lichtbogenschweißgerät mit Abschmelzelektrode nach Anspruch 1, wobei
die Kurzschlusswellenform-Steuerschaltung (8) das Schweißstromerfassungssignal und das Lichtbogenwiderstandssignal entgegennimmt und auf der Grundlage des Lichtbogenwiderstandssignals ein Kurzschlusswellenform-Steuersignal ausgibt,
die Lichtbogenwellenform-Steuerschaltung (9) das Schweißspannungserfassungssignal und das Lichtbogenwiderstandssignal entgegennimmt und auf der Grundlage des Lichtbogenwiderstandssignals ein Lichtbogenwellenform-Steuersigral für die Bogenperiode ausgibt,
die erste Verknüpfungsschaltung (10) das Lichtbogenwellenform-Steuersignal auswählt, wenn das Kurzschlusslichtbogen-Beurteilungssignal die Lichtbogenperiode anzeigt, oder das Kurzschlusswellenform-Steuersignal auswählt, wenn das Kurzschlusslichtbogen-Beurteilungssignal die Kurzschlussperiode anzeigt, und ein ausgewähltes Signal ausgibt,
die Schweißleistung auf der Grundlage des Ausgangs der zweiten Verknüpfungsschaltung (4) gesteuert wird.

## Revendications

1. Machine de soudage à l'arc du type à électrode fusible qui utilise un arc généré entre un métal de base (19) de soudage et un fil-électrode (18) qui lui est alimenté, la machine comprenant :
un circuit (5) de détection de tension de soudage pour détecter une tension de soudage et délivrer en sortie un signal de détection de tension de soudage ;
un circuit (6) de détection de courant de soudage pour détecter un courant de soudage et délivrer en sortie un signal de détection de courant de soudage ;
un circuit (7) d'estimation de l'arc de court-circuit pour délivrer en sortie un signal d'estimation de l'arc de court-circuit après avoir accepté le signal de détection de tension de soudage et estimer si la machine se trouve dans un état où un court-circuit est produit ou dans un état où un arc est produit ;
un circuit (8) de commande de forme d'onde de court-circuit pour délivrer en sortie un signal de commande de forme d'onde de court-circuit après avoir accepté le signal de détection de courant de soudage ;
un circuit (9) de commande de forme d'onde de l'arc pour délivrer en sortie un signal de commande de forme d'onde de l'arc pour une période de production de l'arc après avoir accepté le signal de détection de tension de soudage ; et
un premier circuit de commutation (10) qui accepte le signal de commande de forme d'onde de court-circuit et le signal de commande de forme d'onde de l'arc et sélectionne le signal de commande de forme d'onde de l'arc dans la période de production de l'arc ou le signal de commande de forme d'onde de court-circuit dans la période de production de court-circuit sur la base du signal d'estimation de l'arc de court-circuit, et délivre en sortie un signal sélectionné ;
où la puissance de soudage est commandée par la sortie délivrée du premier circuit de commutation (10),
**caractérisée en ce que**,
la machine comprend en outre :
un calculateur (1) de résistance de l'arc pour calculer et délivrer en sortie un signal de résistance de l'arc après avoir accepté le signal de détection de tension de soudage et le signal de détection de courant de soudage ;
une unité de réglage (3) de période de commande de courant constant qui délivre en sortie un signal de période de commande de courant constant qui indique une période de commande de courant constant après avoir accepté le signal de résistance de l'arc et lorsque le signal de résistance de l'arc continue à présenter une valeur qui est supérieure à une certaine valeur spécifique ;
un circuit (2) de commande de courant constant pour délivrer en sortie un signal de courant constant pour la mise en oeuvre d'une certaine valeur spécifique de courant constant après avoir accepté le signal de détection de courant de soudage et sur la base du signal de détection de courant de soudage introduit ; et
un deuxième circuit de commutation (4) pour sélectionner, suivant le signal de période de commande de courant constant, l'un du signal de courant constant dans la période de commande de courant constant et du signal délivré en sortie du premier circuit de commutation (10) dans une période autre que la période de commande de courant constant, et délivrer en sortie un signal sélectionné ;
où dans la période autre que la période de commande de courant constant, le signal de résistance de l'arc est délivré à au moins l'un du circuit (8) de commande de forme d'onde de court-circuit et du circuit (9) de commande de forme d'onde de l'arc, et la puissance de soudage est commandée sur la base de la sortie délivrée du deuxième circuit de commutation (4).

2. Machine de soudage à l'arc du type à électrode fusible selon la revendication 1, dans laquelle
le circuit (8) de commande de forme d'onde de court-circuit accepte le signal de détection de courant de soudage et le signal de résistance de l'arc et délivre en sortie un signal de commande de forme d'onde de court-circuit sur la base du signal de résistance de l'arc,
le premier circuit de commutation (10) sélectionne le signal de commande de forme d'onde de l'arc lorsque le signal d'estimation de l'arc de court-circuit indique la période de production de l'arc, ou sélectionne le signal de commande de forme d'onde de court-circuit lorsque le signal d'estimation de l'arc de court-circuit indique la période de production d'un court-circuit, et délivre en sortie un signal sélectionné,
la puissance de soudage est commandée sur la base de la sortie délivrée du deuxième circuit de commutation (4).

3. Machine de soudage à l'arc du type à électrode fusible selon la revendication 1, dans laquelle
le circuit (9) de commande de forme d'onde de l'arc accepte le signal de détection de tension de soudage et le signal de résistance de l'arc et délivre en sortie un signal de commande de forme d'onde de l'arc sur la base du signal de résistance de l'arc,
le premier circuit de commutation (10) sélectionne le signal de commande de forme d'onde de l'arc lorsque le signal d'estimation de l'arc de court-circuit indique la période de production de l'arc, ou sélectionne le signal de commande de forme d'onde de court-circuit lorsque le signal d'estimation de l'arc de court-circuit indique la période de production d'un court-circuit, et délivre en sortie un signal sélectionné,
la puissance de soudage est commandée sur la base de la sortie délivrée du deuxième circuit de commutation (4).

4. Machine de soudage à l'arc du type à électrode fusible selon la revendication 1, dans laquelle
le circuit (8) de commande de forme d'onde de court-circuit accepte le signal de détection de courant de soudage et le signal de résistance de l'arc et délivre en sortie un signal de commande de forme d'onde de court-circuit sur la base du signal de résistance de l'arc,
le circuit (9) de commande de forme d'onde de l'arc accepte le signal de détection de tension de soudage et le signal de résistance de l'arc et délivre en sortie un signal de commande de forme d'onde de l'arc pour la période de production de l'arc sur la base du signal de résistance de l'arc,
le premier circuit de commutation (10) sélectionne le signal de commande de forme d'onde de l'arc lorsque le signal d'estimation de l'arc de court-circuit indique la période de production de l'arc, ou sélectionne le signal de commande de forme d'onde de court-circuit lorsque le signal d'estimation de l'arc de court-circuit indique la période de production d'un court-circuit, et délivre en sortie un signal sélectionné,
la puissance de soudage est commandée sur la base de la sortie délivrée du deuxième circuit de commutation (4).
